# EUROPEAN PATENT APPLICATION

(11) **EP 2 248 745 A1**
(43) Date of publication of application: **10.11.2010**
(21) Application number: 10161439.4
(22) Date of filing: 29.04.2010
(51) Int. Cl.: B65G 53/52

(54) **Elbow fitting for pneumatic conveying system**

(30) Priority: 03.05.2009 US 175039 P
(71) Applicant: Pelletron Corporation, Lancaster, PA 17601 (US)
(72) Inventor: Schneider, Heinz, Lancaster, PA 17601 (US); Wagner, Paul, Lancaster, PA 17601 (US)
(74) Representative: Messulam, Alec Moses

(57) **Abstract**

An elbow fitting (10) for a pneumatic product conveying system expands from the inlet pipe (16) along the outer side of the elbow fitting to enable a layer of accumulated product particles to be formed so as to move at a lower velocity than the velocity of the incoming product stream while establishing a moving contact surface for deflecting incoming product particles toward the outlet pipe (17) with a minimum of pressure resistance and product attrition. The outer portion (40) of the elbow fitting is removable from the body portion (35) to allow the outer portion (40) to be replaced when wear becomes an issue in the performance of the elbow fitting. The wear member (40) is affixed to the body portion by a flange (42) that creates a seam extending from the step feature (39) diagonally to the rear wall (27). A gasket or O-ring is trapped within the flange to seal the wear member against the body portion.

## Description

### Field of the invention

The present invention relates generally to pneumatic transport systems and, more particularly, to a fitting for pneumatic pipes to permit a change in direction of the material being conveyed therein.

### Background of the invention

Conveying free flowing bulk material, such as granules, pellets, resins and free-flowing powders, injected into a high velocity stream of air contained within a pipe or tube is well known in industry as pneumatic conveying. Velocities of pneumatic conveying systems are in the range of 400 ft/min to 10000 ft/min and operate in different manners. In a dilute phase, the product is completely immersed in a rapid moving air flow with a low product to air flow ratio. In a dense phase, the product being conveyed moves in plugs through the conduits and operates at a relatively low velocity with a high product to air ratio. An intermediate phase operates at an optimised velocity with a medium product to air ratio as the product is partially dispersed in the gas flow while product will concentrate along the bottoms of horizontal runs of the conveying conduit. The higher the velocity of the air moving through the conduits of the conveying system, the higher the degradation of the product and the damage of pipes and elbows, particularly when abrasive product material is being conveyed through the system. Degradation of the product being conveyed and erosion of the conduits and elbows are caused by friction between interacting conveyed material and between the conveyed material and the walls of the pipes.

Elbow fittings used in pneumatic conveying systems typically suffer wear at the elbow curve in line with the product flow into the elbow fitting, whether the elbow fitting is a short radius elbow or a long radius sweep elbow fitting. Free flowing bulk material flowing into the elbow fitting impact the curved surface of the elbow and are redirected. Centrifugal forces exerted on the particles moving around the outer surface of the elbow fitting generate friction, making the surface of the fitting warm to the touch, which also results in wear within the elbow fittings, particularly when abrasive particles are being conveyed. This heat can have a detrimental effect on the product being conveyed, particularly when the product is heat sensitive, such as plastic pellets on which the edges of the pellets will melt and adhere to the pipe.

One known attempt to overcome the problem of changing direction in a pneumatic conveying system is found in U. S. Patent No. 4,387,914, issued to Hammertek Corporation on June 14, 1983. In this Hammertek patent, the elbow fitting is formed with a vortex opening in substantial alignment with the incoming product stream from the straight section of pipe. The vortex section emulates a blocked "T" fitting by providing a chamber in which a loose ball of product particles slowly rotates to deflect incoming product without causing excessive wear on the fitting.

Another known attempt to overcome the aforementioned problems of changing directions in a pneumatic conveying system is taught in U. S. Patent No. 5,288,111, issued to Waeschle Maschinenfabrik GmbvH on February 22, 1994. In the Waeschle patent, an angularly disposed baffle plate is positioned within an expanded elbow section that has a greater cross-sectional area than the cross-section of the pipe carrying the incoming product. The expanded elbow cross-section increases in size from the inlet pipe by expanding inwardly toward the inner elbow side. The outer elbow side of the expanding section defines a linear relationship with the inlet pipe to direct the stream of product particles into engagement with the baffle plate that is oriented at between 55° and 65° with respect to the axis of the inlet pipe. Accordingly, the expanded elbow cross-section is not intended to provide a flow of material along the outer side of the elbow fitting. Excessive wear on the baffle plate is, therefore, incurred due to the direct impact with the incoming product stream.

Other deflector plate elbow fittings for pneumatic conveying systems are taught in U. S. Patent No. 4,595,319, issued to Richard H. Cook for Cubeco, Inc. on June 17, 1986; and in U. S. Patent No. 4,733,889, issued to Edwin L. Haines for The Goodyear Tire and Rubber Company on March 29, 1988. Both patents provide for an expanded elbow cross-section in conjunction with the obliquely arranged deflector plate or corresponding linear deflecting portion of the elbow outer side. In U. S. Patent No. 4,606,556, issued to Robert E. Metzger for Fuller Company on August 19, 1986, a stepped deflector plate is positioned at the outer elbow side to provide for a reduced wear elbow fitting. As the steps or ribs wear, the extra thickness of the material will permit a longer life for the fitting. In U. S. Patent No. 4,995,645, issued to Josef Pausch for General Resource Corporation on February 26, 1991, an open expanded area at the impact zone for the incoming particles is provided to create an accumulation of product in alignment with the incoming stream of product particles. The elbow section is expanded with a flare at 15° to provide improved product flow after impacting the accumulated material.

In U. S. Patent No. 5,024,466, issued to Gregory R. Brotz on June 18, 1991, the elbow fitting is formed with an expanded box section at the outer elbow side in which a screen is positioned to engage product particles. The expanded box section is coupled to a vacuum system to hold particles against the screen member to form an accumulation area of product into which the incoming product particles impact. The captured product particles are retained against the screen until worn sufficiently to be replaced by other product particles. While the structure of the Brotz patent provides a layer of product to absorb the impact of incoming product particles and thus reduce wear on the outer side of the elbow, the Brotz apparatus does not contemplate a moving flow of material along the outer elbow side.

A solution to providing an elbow fitting with minimal wear characteristics can be found in U. S. Patent No. 6,951,354, granted on October 4, 2005, to Jerome I. Paulson, and in U. S. Patent No. 7,300,074, granted on November 27, 2007, to Jerome I. Paulson, both of which have been assigned to Pelletron Corporation. In these two patents, an elbow fitting expands from the inlet pipe along the outer side of the elbow fitting to define a generally triangularly shaped configuration that retains a layer of slowly moving particles being conveyed within the pneumatic conveying system along the outside surface of the fitting to deflect incoming product flow. In U. S. Patent No. 7,300,074, a step feature was added to the outer surface structure of the elbow fitting to create a Bernoulli Effect causing the accumulated product particles to enter the air flow after the incoming flow of product particles has ceased. Even though wear characteristics were substantially reduced by the expanded elbow fitting, ultimately some wear along the outside surface of the elbow fitting occurs, which will require the replacement of the elbow fitting.

### Summary of the invention

In accordance with the present invention, there is provided an elbow fitting for use in effecting directional changes from an inlet line to an outlet line in a pneumatic conveying system for conveying particulate material, having a circular inlet portion connectable to the inlet line to receive a flow of product particles therefrom, a circular outlet portion connectable to the outlet line to discharge the flow of product particles into the outlet line, and a curved expanded portion interconnecting the inlet portion and the outlet portion to define an expanded non-circular cross-section through an angular deflection corresponding to the inlet portion and the outlet portion, **characterised in that** the fitting is formed of a body portion incorporating the circular inlet portion, the circular outlet portion and a radially inward side of the elbow fitting defining a smooth circular interior bend from the inlet portion to the outlet portion; and a removable wear member corresponding to the curved expanded portion detachably connected to the body portion.

Preferably, the body portion and the removable wear member include mating mounting flanges to permit the removable wear member to be detachably connected to the body portion.

In the preferred embodiment of the invention, the attachment of the removable wear member to the body portion defines a line of separation extending diagonally across the elbow fitting.

Advantageously, the curved expanded portion expands in depth into a radially outward side of the elbow fitting from the inlet portion through a step in the radially outward side of the elbow fitting, the step defining a sharp drop in the radially outward side of the elbow fitting defined by a slope angle substantially greater than a corresponding slope angle of the inlet transition portion and of the curved expanded portion.

Conveniently, the curved expanded portion includes an outer surface having a generally linear bottom wall, a generally linear back wall and a curved portion interconnecting the bottom wall (260 and the back wall.

Suitably, the line of separation extends from the step to the back wall, such that substantially all of the outer surface is encompassed within the removable wear member.

A seal may be positioned between the removable wear member and the body portion to seal the line of separation.

Because they are formed separately, the body portion and the wear member may be formed of different materials. Thus, forming the replaceable wear member from a harder material than the body portion of the elbow fitting will enhance the life of the elbow fitting without substantially increasing the cost of the elbow fitting.

The invention provides the advantage that the wear member can be removed to access the interior of the elbow fitting to clean out both the inlet and outlet legs of the elbow fitting and attached piping. Furthermore, in the preferred embodiment of the invention, the seam formed between the replaceable wear member and the body portion does not detract from the performance of the elbow fitting.

The fitting of the invention can be shaped to provide optimise aerodynamic flow of air and product through the fitting, to minimise heat generated from friction along the outer side of the elbow fitting and eliminate the melting of plastic particles from engagement with the elbow fitting.

It is a further advantage of this invention that a moving accumulation layer of product is uniformly distributed over an expanded triangular fitting configuration to provide a resultant reflective force upwardly toward the outlet pipe at approximately 90°.

Other advantages offered by the invention include:
- A directional change for a pneumatic product conveying system is achieved with minimum pressure resistance and product attrition.
- Reduced flow resistance results in lower energy requirement for imposing a change in direction for the flow of product through a pneumatic transport system.
- The expanded shape for the outer side of the elbow fitting utilizes gravity and Bernoulli's Law to reduce the velocity of the accumulated product layer.

### Brief description of the drawings

The invention will now be described further, by way of example, with reference to the accompanying drawings, in which :
Fig. 1 is a side elevational view of a 90° elbow fitting having a replaceable wear member forming the outer portion of the elbow fitting embodying the present invention;
Fig. 2 is a front elevational view of the elbow fitting shown in Fig. 1, looking into the inlet portion of the fitting;
Fig. 3 is a top plan view of the elbow fitting depicted in Fig. 1, looking into the outlet portion of the fitting; and
Fig. 4 is an exploded side elevational view of the elbow fitting depicted in Fig. 1, the replaceable wear member being separated from the body portion.

### Detailed description of the preferred embodiment(s)

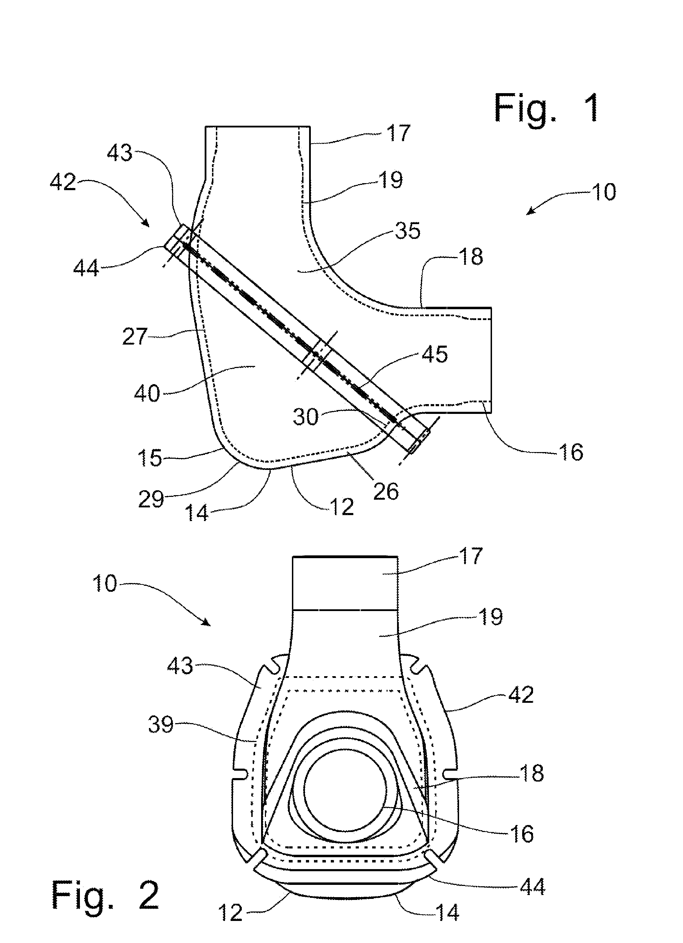

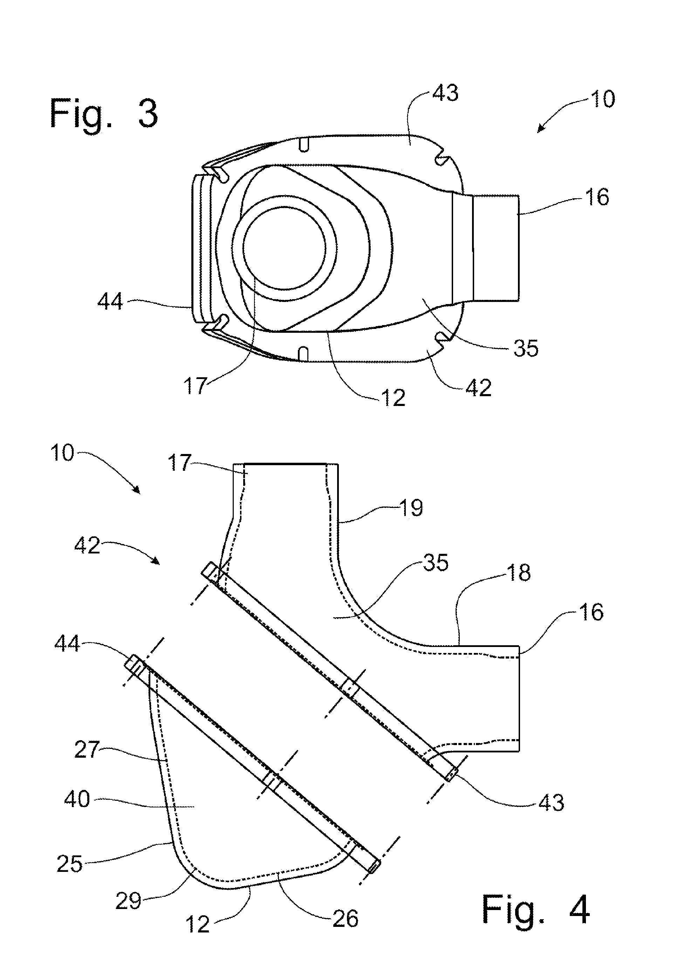

Figs. 1 to 4, a 90° illustrate an elbow fitting embodying the present invention. The elbow fitting is intended for use in a pneumatic product conveying system utilising only the dilute and intermediate phases of conveying by connecting to a conventional inlet pipe (not shown) and an outlet pipe (not shown) to provide a directional change for the path of travel of the product within the pneumatic system. The operation and general structural details of the expanded elbow fitting are disclosed in U. S. Patent No. 6,951,354, issued to Jerome I. Paulson on October 4, 2005, and in U. S. Patent No. 7,300,074, issued to Jerome I. Paulson on November 27, 2007, the contents of both issued patents being incorporated herein by reference in their entirety.

The elbow fitting 10 is preferably formed from a durable metallic material, such as aluminium, cast iron or stainless steel, and includes an inlet portion 16 and an outlet portion 17, each of which is sized to mate with the inlet pipe (not shown) and the outlet pipe (not shown) in a known manner, such as through a known compression coupling (not shown). Between the inlet portion 16 and the outlet portion 17, the elbow fitting 10 includes an inlet transition section 18 and similar outlet transition section 19 connected, respectively, to the inlet portion 16 and the outlet portion 17. Lastly, a curved expanded section 12 interconnects the inlet and outlet transition sections 18, 19.

The inlet and outlet transition sections 18, 19 transcend between a circular cross-section of the inlet and outlet portions 16, 17 and a generally triangular cross-sectional configuration of the curved expanded portion 12. The triangular shape of the curved expanded portion 12 generally carries through the curved expanded portion 12, except as required to curve from one direction to another at the apex 15 of the curved expanded portion 12. Preferably, the triangular shape of the triangular cross-section of the curved expanded portion 12, as is best seen in Fig. 1, has three curved apexes connected with the adjacent apex by a linear portion, one of which defines a bottom portion 14 having a width greater than the diameter of the inlet and outlet portions 16, 17.

Gravity and centrifugal force will urge bulk material particles flowing through the elbow fitting 10 outwardly into the expanded area 12 to provide a slurry layer of accumulated particles along the outer side 25 of the curved expanded portion 12 of the elbow fitting 10. Due to the expanded cross-sectional area of the curved expanded portion 12, compared to the inlet portion 16, Bernoulli's Law requires that the velocity of the product particles will be slowed, as compared to the velocity of the bulk material product particles travelling through the circular inlet portion 16. This layer of accumulated particles provides a moving impact zone for the incoming bulk material particles exiting the inlet portion 16, which can then be deflected upwardly toward the outlet pipe 13 to effect a change of direction for the product being conveyed.

The slowly moving layer 29 of accumulated product particles along the outer side 25 of the curved expanded section 12 also prevents an elevation of the temperature of the fitting 10 that would be normally attributable to friction from the impact of the incoming bulk material particles against the outer side of the fitting 10. As a result, the bulk material will not be damaged by the elevation in temperature.

The curved expanded section 12 is preferably formed with a curved outer side 25, or for the sake of manufacturing convenience may be formed from a pair of linear portions 26, 27 interconnected by a curved portion 29. The linear portions 26, 27 are not perpendicular but are disposed through an angular deflection of approximately 100°, which is at approximately 80° to the line of the incoming product stream through the inlet portion 16. Since the layer of accumulated product particles along the outer side 25 serves to deflect incoming bulk material product particles toward the outlet portion 17, the outer side 25 does not need to function as a deflector plate that needs to be disposed at 55° to 65° with respect to the axis of the inlet portion 16.

The outlet transition section 19 provides a smooth transition from the triangular shape of the curved expanded portion 12 to the circular shape of the outlet portion 17. Thus, the layer of accumulated product particles is directed back into the outlet pipe (not shown) to provide a continuous flow of particles through the elbow fitting, including the moving accumulated layer along the outer side 25 of the fitting.

While the elbow fitting 10 described above is particularly suitable for use in either dense phase or dilute phase pneumatic product transport systems, one skilled in the art will recognize that the same principles for effecting a directional change for slurry product transport systems also apply. The elbow fitting 10 described above provides a lower resistance to effecting directional changes in the flow of bulk material product particles through the system. As a result, the energy required to effect directional changes is lower than known long radius elbows. Damage to the product being conveyed, or to the elbow fitting, due to frictional losses and impact, as is known for long radius elbow fittings, will be significantly reduced. Accordingly, superior results with lower energy costs are associated with the present invention. The exchange of the removable member 40 of the elbow fitting 10 can be accomplished without removing the entire elbow fitting 10 from the conveying system and, thus, will save costs.

The downward expansion of the outer surface 25 of the elbow fitting 10 is preferably accomplished through a sharp step 30 at the inlet transition portion 18. The step 30 has a slope angle, as is best seen in Fig. 1, which is substantially greater than the slope angle of the inlet portion 16, which is at a nominal zero angle, and the slope angle of the bottom linear portion 27 of the curved expanded portion 12, which is at approximately 10°. The formation of the step 30 creates a Bernoulli effect that allows the layer of accumulated product particles to be formed along the outer surface of the curved expanded portion 12, but creates pressure differentials when the incoming flow of bulk material product particles into the elbow fitting 10 ceases, which will draw the particles from the accumulated layer along the outer surface 25 into the air flow through the elbow fitting 10. Thus, when the pneumatic conveying system stops conveying product particles, the final flow of air through the system to clean product particles out of the system will effectively clean the particles from the elbow fitting 10 as well.

Without the formation of the step 30, it is believed that the stream of air entering the inlet portion 16 to purge the fitting 10 of remaining product particles would pass over the accumulated solids along the bottom floor 26 of the outer expanded surface 25 and strike the back wall 27 of the fitting 10, causing a high pressure condition on the surface of the accumulated solids and preventing the particles from purging from the elbow fitting 10.

By modifying the bottom surface 26 of the elbow fitting 10 to extend the bottom inlet portion 16 along the line of the expected accumulated layer while opening the sides of the fitting 10 outwardly to form the curved expanded portion 12 to a point at which the sharp drop or step 30 could be incorporated, the purge air flow was directed upwardly into the main air flow entering the fitting 10 through the inlet portion 16. The result is a reduction in pressure and the creation of pressure differentials relative to the accumulated particles permitting them to be purged back into the main air flow and discharged from the fitting 10. The incorporation of the sharp drop or step 30 into the bottom surface 26 of the elbow fitting 10 improves purge performance substantially.

With all the movement of the particles along the interior surface 21 of the elbow fitting 10, even though substantially slowed through the expanded triangular portion 12, the movement of the particles along the outer surface 25 of the elbow fitting 10 will still cause some wear to the elbow fitting 10, particularly when abrasive bulk material is being conveyed through the system. When the wear in the expanded triangular portion 12 becomes a factor in the performance of the elbow fitting 10, the fitting 10 needs to be replaced. Tests have shown that substantially all of the wear in the outer surface 25 of the fitting 10 occurs along the expanded triangular portion 12, and particularly at the curved portion 29 and the back wall 27 where the particles make a directional transition from moving from the direction of the inlet portion 16 to the direction of the outlet portion 17.

To facilitate the replacement of the worn portions of the elbow fitting 10, the elbow fitting 10 is formed in two parts, a body portion 35 that extends from and incorporates the inlet portion 16 and the outlet portion 17, and a removable wear portion 40 that encompasses the bottom floor portion 26, the back wall portion 27 and the curved portion 29 interconnecting the linear floor and back wall portions 26, 27. Accordingly, the removable wear portion 40 will suffer the majority of the wear characteristics for the elbow fitting 10. The line of separation 45 between the body portion 35 and the removable wear portion 40 lies on a diagonal that extends from the step 30 to the outlet transition portion 19. A gasket 39, shown in dashed lines in Fig. 2, or an appropriate O-ring (not shown) is positioned along the line of separation 45 between the body portion 35 and the removable wear portion 40 to seal the line of separation 45.

The fitting 10 is provided with a mounting flange 42 having a first part 43 formed into the body portion 35 and a second part 44 formed into the removable wear portion 40 to mate against the first part 43. The two parts 43, 44 of the mounting flange 42 can be coupled together by removable fasteners (not shown). When clamped together, the parts 43, 44 of the mounting flange 42 orients a finely machined line of separation 45 that is of minimal effect to the movement and positioning of the layer of accumulated product particles, as the accumulated layer of particles will only engage the line of separation 45 adjacent the step 30 and adjacent the back wall 27.

To replace the wear portion 40, the fasteners clamping the parts 43, 44 of the mounting flange 42 together are removed and the removable wear portion 40 can be detached from the body portion 35 while the body portion 35 remains connected to the pneumatic conveying system (not shown) so that the entire elbow fitting 10 does not have to be removed from the pneumatic conveying system. A new removable wear portion 40 can then be installed by mating the parts 43, 44 of the mounting flange 42 and re-connecting the fasteners to clamp a gasket 39 along the line of separation 45. Since the connection of the elbow fitting 10 to the pneumatic conveying system does not have to be disturbed, the replacement of the wear member 40 can be accomplished with minimal disruption to the operation of the pneumatic conveying system.

Providing a removable wear member 40 on the elbow fitting 10 also provides the ability to clean the interior of the elbow fitting 10 and attached piping by accessing both of the inlet and outlet portions 16, 17 retained within the body portion 35 once the wear member 40 has been removed from the fitting 10. Furthermore, the removable wear member 40 can be constructed from different material than the body portion 35 so as to enhance the durability of the wear member 40, or provide other operational advantages, without requiring that the entire elbow fitting 10 be formed of the same material as the replaceable wear member 40.

For example, for applications where the elbow fitting 10 is being used in the conveying of minerals, particularly minerals that provide an extreme wear condition within the elbow fitting 10, the replaceable wear member 40 can be formed from carbon steel to provide enhanced wear characteristics, while the body portion is constructed from hardened steel. Since carbon steel is significantly more expensive than hardened steel, an elbow fitting 10 with only the replaceable wear member 40 being formed from carbon steel would be less expensive to manufacture than requiring the entire elbow fitting to be formed from carbon steel. As noted above, the wear member 40 can be replaced without scrapping the body portion 35 which provides a significant cost savings in high wear applications.

As a further example, the use of the elbow fitting 10 in sanitary applications, such as food and pharmaceutical industrial uses, the entire elbow fitting 10 would be manufactured from stainless steel; however, the ability to remove the removable wear member 40 allows the entire pneumatic conveying lines to be cleaned between uses to maintain the sanitary conditions thereof without requiring the entire conveying line to be disassembled. By removing the wear member 40, the operator has access to both directions of the conveying lines for cleaning purposes. Providing the elbow fitting with an internal electropolished finish forms a near mirror finish on the interior of the elbow fitting 10 which virtually eliminates any porous areas within the elbow fitting 10 for material to gather.

It will be clear from the foregoing description that the invention provides an elbow fitting with a replaceable outer wear member for pneumatic product conveying systems that is durable in construction, inexpensive to manufacture, simple to maintain, easy to assemble and effective in use.

## Claims

1. An elbow fitting (10) for use in effecting directional changes from an inlet line to an outlet line in a pneumatic conveying system for conveying particulate material, having a circular inlet portion (16) connectable to the inlet line to receive a flow of product particles therefrom, a circular outlet portion (17) connectable to the outlet line to discharge the flow of product particles into the outlet line, and a curved expanded portion interconnecting the inlet portion and the outlet portion to define an expanded non-circular cross-section through an angular deflection corresponding to the inlet portion and the outlet portion, **characterised in that** the fitting (10) is formed of a body portion (35) incorporating the circular inlet portion (16), the circular outlet portion (17) and a radially inward side of the elbow fitting defining a smooth circular interior bend from the inlet portion (16) to the outlet portion (17); and a removable wear member (40) corresponding to the curved expanded portion detachably connected to the body portion (35).

2. An elbow fitting as claimed in Claim 1, wherein the body portion (35) and the removable wear member )40) include mating mounting flanges (43,44) to permit the removable wear member to be detachably connected to the body portion.

3. An elbow fitting as claimed in Claim 2, wherein the attachment of the removable wear member to the body portion defines a line of separation (45) extending diagonally across the elbow fitting.

4. An elbow fitting as claimed in any preceding claim, wherein the curved expanded portion expands in depth into a radially outward side of the elbow fitting (10) from the inlet portion (16) through a step (39) in the radially outward side of the elbow fitting, the step (39) defining a sharp drop in the radially outward side of the elbow fitting (10) defined by a slope angle substantially greater than a corresponding slope angle of the inlet transition portion and of the curved expanded portion.

5. An elbow fitting as claimed in any preceding claim, wherein the curved expanded portion includes an outer surface (25) having a generally linear bottom wall (26), a generally linear back wall (27) and a curved portion (29) interconnecting the bottom wall (260 and the back wall (27).

6. An elbow fitting as claimed in Claims 3, 4 and 5, wherein the line of separation (45) extends from the step (39) to the back wall, such that substantially all of the outer surface is encompassed within the removable wear member.

7. An elbow fitting as claimed in Claim 6 further comprising a seal (39) positioned between the removable wear member (40) and the body portion (35) to seal the line of separation.

8. An elbow fitting as claimed in any preceding claim, wherein the body portion (35) and the wear member (40) are formed of different materials.
